# EUROPÄISCHE PATENTANMELDUNG

(11) **EP 4 063 527 A1**
(43) Veröffentlichungstag der Anmeldung: **28.09.2022**
(21) Anmeldenummer: 22160806.0
(22) Anmeldetag: 08.03.2022
(51) Int. Cl.: C22B 3/04, C01D 15/02, C01D 15/08, C22B 3/24, C22B 3/42, C22B 3/44, C22B 26/12

(54) **VERFAHREN ZUR GEWINNUNG VON LITHIUM AUS SOLE UND ZUR RÜCKGEWINNUNG VON LITHIUM BEIM RECYCLING VON LITHIUM-IONEN-AKKUMULATOREN**

(30) Priorität: 10.03.2021 DE 102021105808; 05.07.2021 DE 102021117319
(71) Anmelder: EnBW Energie Baden-Württemberg AG, 76131 Karlsruhe (DE)
(72) Erfinder: Kölbel, Thomas, 76228 Karlsruhe (DE); Kaymakci, Elif, 76337 Waldbronn (DE); Herrmann, Laura, 76227 Karlsruhe (DE); Graczyk-Zajac, Magdalena, 69126 Heidelberg (DE)
(74) Vertreter: DREISS Patentanwälte PartG mbB

(57) **Zusammenfassung**

Es wird ein Adsorptionsverfahren zur Gewinnung von Lithium aus einer Sole vorgeschlagen, bei dem die Desorption mit Hilfe eines Eluenten erfolgt, wobei der Eluent ein Gemisch aus Wasser und Essigsäure und/oder Wasser und Natrium Peroxodisulfat und/oder Wasser und Ammonium Peroxodisulfat ist.

## Beschreibung

Die vorliegende Erfindung betrifft ein Verfahren zur Gewinnung / Rückgewinnung von Lithium-Ionen aus Sole oder Meerwasser durch Adsorption. Die Sole kann aus Meerwasserentsalzungsanlagen oder geothermischen Tiefenbohrungen stammen oder beim Recycling von Lithium-Ionen-Akkumulatoren anfallen.

Aufgrund ihrer Vorzüge, wie z.B. einer hohen elektrischen Energiedichte, einer hohen Arbeitsspannung, einer langen zyklischen Lebensdauer, dem fehlenden Memory-Effekt usw., ist die wiederaufladbare Lithium-Ionen-Batterie (genauer gesagt:
der Lithium-Ionen-Akkumulator) in Notebook-Computern, Mobiltelefonen und Elektroautos weit verbreitet. Die Nachfrage nach Lithium-Ionen-Akkumulatoren steigt unter anderem im Zuge der Elektromobilität stark an. In solchen Akkumulatoren liegt Lithium im Elektrodenmaterial (fest) und im Elektrolyt (flüssig) vor.

Nach einigen Jahren haben die Akkumulatoren das Ende ihrer Lebensdauer erreicht und müssen recycelt werden.

Die Europäische Union gibt in ihrer Batteriedirektive verbindliche Mindestgrenzen für die Verwertung von Lithium vor: Mindestens 35% ab 2026 und mindestens 70% im Jahr 2030.

Derzeit sind zwei Recycling-Technologien für lithium-Ionen-Akkumulatoren bekannt.

Die Hydrometallurgie und die Pyrometallurgie.

Kurz gesagt, werden bei der Hydrometallurgie die Akkumulatoren zerlegt, gemahlen und das Mahlgut anschließend gesiebt. Beim Sieben werden vor allem Kunststoffe und Metalle wiedergewonnen.

Anschließend werden weitere Rohstoffen aus dem Mahlgut mit Hilfe einer Säure (in der Regel Schwefelsäure) gelöst. Dieser Schritt wird auch als "Auslaugen" bezeichnet.

Die gelösten Rohstoffe liegen nun in flüssiger Form vor und sollen möglichst effektiv von dieser Flüssigkeit getrennt werden, so dass am Ende des Trenn-Prozesses Rohstoffe, insbesondere das Lithium, in relativ reiner Form vorliegt.

Dieser Schritt wird auch als "Trennen" bezeichnet. Die Effizienz des Trennverfahrens soll so hoch sein, dass die getrennten Stoffe wieder zur Herstellung neuer Akkumulatoren eingesetzt werden können (battery grade).

Bei der Pyrometallurgie werden die Akkumulatoren in einen Schmelzofen gegeben. Dabei verbrennen die brennbaren Bestandteile des Mahlguts und es werden verschiedene Metalle zurückgewonnen. Übrig bleibt eine Schlacke in der das gesuchte Lithium, aber auch Aluminium gebunden sind.

Aus dieser Schlacke wird das Lithium mit Hilfe von Säuren, wie zum Beispiel eine Mischung von Schwefelsäure und Salzsäure oder mit einem hydrothermischen Verfahren gelöst. Dieser Schritt wird auch als "Auslaugen" bezeichnet. In dieser sauren wässrigen Lösung (Sole) befindet sich Lithium in einer ionischen Form z.B. als Lithium-Sulfat.

Auch am Ende dieses Recycling-Verfahrens liegen die gelösten Rohstoffe, insbesondere das gesuchte Lithium in flüssiger Form vor. Es soll möglichst effektiv von dieser Flüssigkeit getrennt werden, so dass am Ende des Trenn-Prozesses Rohstoffe, insbesondere das Lithium in relativ reiner Form vorliegt. Dieser Schritt wird auch als "Wiedergewinnung" bezeichnet. Die Effizienz des Trennverfahrens soll so hoch sein, dass die getrennten Stoffe wieder zur Herstellung neuer Akkumulatoren eingesetzt werden können (battery grade).

Die Erfindung betrifft die Wiedergewinnung von Lithium aus einer wässrigen sauren Lösung, die sowohl bei der Hydrometallurgie als auch der Pyrometallurgie entsteht.

Diese Lithium-Ionen enthaltende wässerige Lösung von Salzen wird im Zusammenhang mit der Erfindung auch als "Sole" bezeichnet. Insbesondere fallen Grund- und Tiefenwasser sowie Meerwasser bzw. die "Abfallprodukte" von Meerwasserentsalzungsanlagen unter den Begriff "Sole" im Sinne der Erfindung.

Um aus einer Sole, die nur wenige Lithiumionen enthält (typischerweise 10 bis 1000 mg/L), Lithiumsalze herstellen zu können, sollte deren Konzentration 15.000 ppm oder größer sein. Daher besteht ein großes Interesse an der Entwicklung eines Verfahrens zur Erhöhung der Lithium-Ionen-Konzentration der Sole auf ein Niveau, das für die Herstellung von Lithiumsalzen erforderlich ist.

Die US 6 764 584 B2 beschreibt ein Verfahren zur Adsorption von Lithiumionen aus einer lithiumhaltigen wässrigen Lösung (Sole) durch ein Adsorptionsverfahren. Das Verfahren umfasst das Inkontaktbringen einer lithiumhaltigen wässrigen Lösung mit einem Adsorptionsmittel aus lithiumhaltigem Manganoxid, so dass Lithiumionen in der wässrigen Lösung an dem Adsorptionsmittel adsorbiert werden. Anschließend wird die Sole abgelassen und die an dem Adsorptionsmittel anhaftenden Lithium-Ionen durch ein Gemisch aus Wasser und Salzsäure (HCl) desorbiert. Dadurch kann ein eine saure Lösung mit einer Lithiumkonzentration von etwa 1.500 ppm erreicht werden. Die Lithiumkonzentration der sauren Lösung wird anschließend durch eine zweistufige Elektrolyse weiter erhöht, so dass eine zur Herstellung von Lithiumsalzen geeignete Lithiumkonzentration von etwa 15.000 ppm oder mehr erreicht wird.

Der Erfindung liegt die Aufgabe zugrunde, ein Verfahren bereitzustellen, mit dessen Hilfe das zum Beispiel in der beim Recycling von Lithium-Ionen-Akkumulatoren anfallenden Sole effektiv, relativ rein und mit Blick auf die Kosten und den Einsatz von Verbrauchsmaterialien effizient abgetrennt werden kann. Das Verfahren soll auch zur Gewinnung von Lithium aus Solen anderen Ursprungs geeignet sein.

Diese Aufgabe wird erfindungsgemäß gelöst bei einem Verfahren zur Herstellung eines Lithiumkonzentrats aus Sole, welche Lithiumionen enthält, und das erfindungsgemäß folgende Schritte umfasst:
a) Einleiten von Sole in eine Adsorberkolonne, die mindestens teilweise mit einem Adsorptionsmittel gefüllt ist, so dass Lithiumionen an dem Adsorptionsmittel absorbiert werden;
b) Ablassen der Sole aus der Adsorberkolonne;
c) Einleiten eines Eluenten (Lösungsmittel, das zum Eluieren verwendet wird) in die Adsorberkolonne, so dass die an dem Absorptionsmittel absorbierten Lithiumionen desorbiert werden, und dadurch gekennzeichnet ist, dass der Eluent (vor dem Einleiten in die Adsorberkolonne) ein Gemisch, das Wasser und Essigsäure und/oder Wasser und Natrium Peroxodisulfat und/oder Wasser und Ammonium Peroxodisulfat enthält.

Die Verwendung dieser drei Eluenten hat zur Folge, dass zwar die Desorption der Lithiumionen weniger effektiv ist als bei der Verwendung von Salzsäure; allerdings ist die Auflösung (Dissolution) des Adsorptionsmittels um mehrere Größenordnungen kleiner als bei der Verwendung von Salzsäure / einer sauren Lösung auf Basis von Salzsäure.

Bei Versuchen wurde festgestellt, dass jeder Desorptionsschritt mit einer sauren Lösung auf Basis von Salzsäure eine Auflösung des Adsorptionsmittels von bis zu 5% verursacht. Bei der Verwendung eines Eluenten auf Basis von Wasser und Essigsäure ist die Auflösung des Adsorptionsmittels um mehrere Größenordnungen geringer. Anders ausgedrückt: Der Verlust betrug in Versuchen bei allen drei erfindungsgemäßen Lösungen nur etwa 1/1000 des Verlusts bei Verwendung einer sauren Lösung auf der Basis von Salzsäure!

Weil das Adsorptionsmittel ein relativ teures Produkt ist, wird durch die Verwendung der Lösung von Essigsäure bzw. Natrium Peroxodisulfat oder Ammonium Peroxodisulfat trotz der schlechteren Desorptionsrate die Wirtschaftlichkeit des Verfahrens erhöht. Die im Vergleich zu dem vorbekannten Verfahren auf Basis von Salzsäure schlechtere Effizienz der Desorption ist unter wirtschaftlichen Aspekten und Effizienzgesichtspunkten unkritisch, weil die an dem Adsorptionsmittel angelagerten Lithiumionen nicht "verloren" sind, sondern in einer darauffolgenden Desorption ganz oder teilweise desorbiert werden.

Ein weiterer Vorteil der Verwendung der erfindungsgemäßen Eluenten ist darin zu sehen, dass sie sehr kostengünstig sind. Sie sind auch mit Blick auf die Handhabung und ihr Gefährdungspotential günstiger als Salzsäure. Daher ist auch unter diesem Aspekt die Verwendung der genannten Lösungen ein wesentlicher Vorteil.

Durch das erfindungsgemäße Verfahren kann Lithium mit einer Reinheit (wieder-)gewonnen werden, das zur Produktion neuer Lithium-Ionen-Akkumulatoren geeignet ist. Es ermöglicht eine echte Kreislaufwirtschaft des Rohstoffs Lithium, ohne Qualitätsverluste. Im Ergebnis ist das erfindungsgemäße Adsorptionsverfahren wirtschaftlich und einfach in der Handhabung.

Es hat sich herausgestellt, dass Konzentrationen bzw. die Anteile der Essigsäure, des Natrium Peroxodisulfats bzw. des Amoniumperoxodisulfats in den Bereichen, wie sie in den Unteransprüchen 2 bis 4 beansprucht werden, eine besonders wirtschaftliche Betriebsweise ermöglichen.

Des Weiteren ist in einer vorteilhaften Ausgestaltung der Erfindung vorgesehen, den Desorptionsschritt bei einer Temperatur, das heißt in einem Bereich zwischen 50°C und 70°C, bevorzugt bei etwa 60°C, durchzuführen.

Es hat sich herausgestellt, dass auch mit zunehmender Temperatur der Desorptionsprozess eine hohe Effektivität hat. Durch die erfindungsgemäße Temperaturführung - insbesondere durch einen weiteren Desorptionsprozess bei niedrigeren Temperaturen - kann die Wirtschaftlichkeit weiter verbessert werden.

Des Weiteren ist es in erfindungsgemäßer Weiterbildung des Verfahrens möglich, den Desorptionsschritt einmal oder sogar mehrfach zu wiederholen. Das bedeutet, dass die bereits Lithiumionen enthaltende Lösung nach dem ersten Desorptionsschritt erneut in die Adsorberkolonne geführt wird und in einem zweiten Desorptionsschritt dann weitere noch an dem Adsorptionsmittel anhaftenden bzw. adsorbierten Lithiumionen abgelöst werden können. Dadurch erhöht sich Desorptionsrate deutlich; trotzdem ist der Verlust an Adsorptionsmittel immer noch sehr gering verglichen mit dem vorbekannten Verfahren.

Wenn die Sole auch andere Ionen, wie beispielsweise Natrium, Kalium, Kalzium und/oder Magnesium enthält, dann lagern sich diese, wenn auch nur in geringem Maße, ebenfalls an dem Adsorptionsmittel an, was prinzipiell unerwünscht ist. Um diese Ionen vor der Desorption der Lithiumionen von dem Adsorptionsmittel zu entfernen, hat es sich als vorteilhaft erwiesen, Wasser in die Adsorberkolonne einzufüllen. Das Wasser desorbiert die genannten Ionen; nicht aber die Lithiumionen, so dass in dem anschließenden Desorptionsschritt mit der erfindungsgemäßen Lösung ausschließlich Lithiumionen desorbiert werden und die daraus resultierende lithiumreiche Lösung einen sehr hohen Reinheitsgrad hat. Das vereinfacht die Weiterverarbeitung zu Lithiumcarbonat oder Vorprodukten von Batterien oder dergleichen.

Zu Durchführung des erfindungsgemäßen Verfahren eignen sich besonders gut Adsorptionsmittel, die lithiumhaltiges Manganoxid, Lithium-Titan-Oxid (LiTiO) und/oder Lithiumaluminiumschicht-Doppelhydroxidchlorid (LiAn · 2×Al(OH)₃ · mH₂O , mit "An" = Chlor (Cl) , Brom (Br) oder Jod (I), "m" ist ein Zähler) umfassen. Dabei haben sich Polymere als Bindemittel bewährt. Polyvinylchlorid ist ein besonderes gut geeignetes Bindemittel.

Das erfindungsgemäße Verfahren ist sehr gut einsetzbar, wenn die lithiumhaltige Sole aus dem pyrometallurgischen Recyclingverfahren von Lithium-Ionen-Akkumulatoren stammt.

Dann enthält die Sole neben dem gesuchten Lithium in der Regel noch Natrium, Aluminium und Mangan, die von dem Lithium getrennt werden sollen.

Das erfindungsgemäße Verfahren ist ebenfalls sehr gut einsetzbar, wenn die lithiumhaltige Sole aus dem hydrometallurgischen Recycling von Lithium-Ionen-Akkumulatoren stammt. Dann enthält die Sole neben dem gewünschten Lithium in der Regel noch Reste von Grafit, Kobalt, Nickel, Mangan und Aluminium.

Die Zusammensetzung der aus dem Recycling von Lithium-Ionen-Akkumulatoren stammenden Sole ist meistens weniger komplex als die von Sole aus Meerwasserentsalzungsanlagen oder von Sole, die bei geothermischen Tiefbohrungen gefördert wird. Mit Hilfe des erfindungsgemäßen Verfahrens kann auch aus diesen lithiumhaltigen Solen das Lithium gewonnen werden. Aber die erfindungsgemäße selektive Adsorption von Lithium aus Sole, die von der Pyrometallurgie oder der Hydrometallurige stammt, ist noch effektiver und die Reinheit des dabei gewonnenen Lithiums ist höher.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination erfindungswesentlich sein.

### Zeichnungen

Es zeigen:

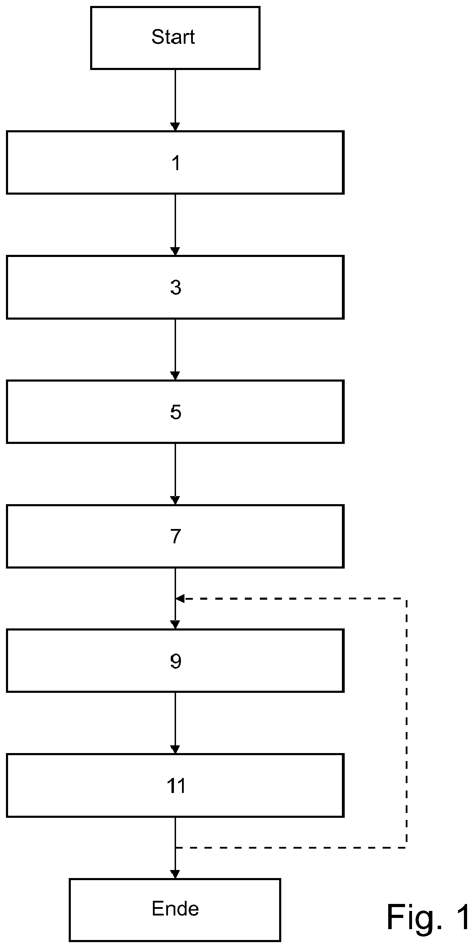

- Figur 1: ein Ablaufdiagramm eines erfindungsgemäßen Verfahrens und die
- Figur 2: eine vereinfachte Darstellung einer zur Durchführung des erfindungsgemäßen Verfahrens geeigneten Adsorberkolonne.

### Beschreibung der Ausführungsbeispiele

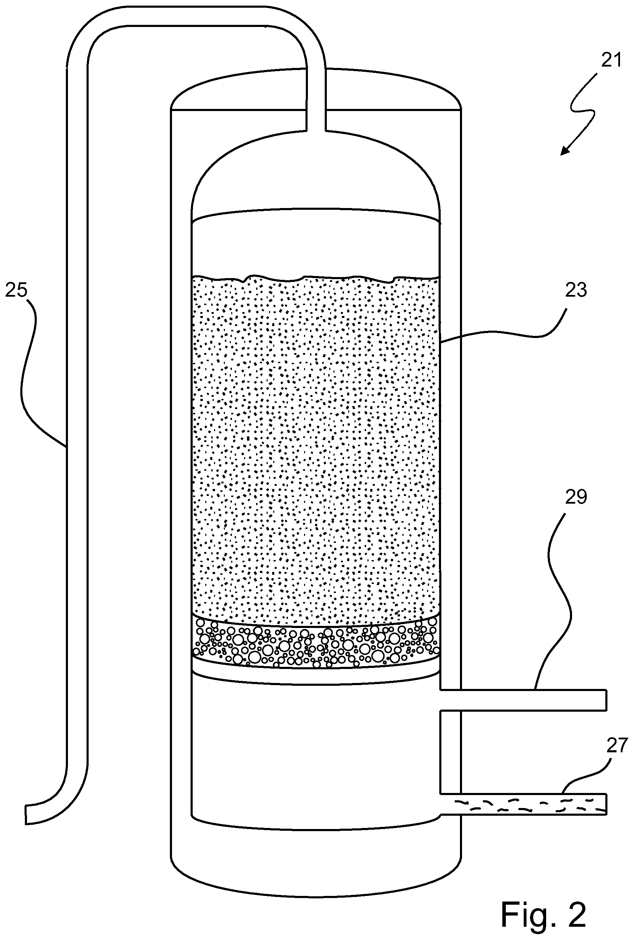

Das erfindungsgemäße Verfahren wird mit Hilfe einer Adsorberkolonne 21 durchgeführt, wie sie in der Figur 2 dargestellt ist.

Das erfindungsgemäße Verfahren beginnt in einem ersten Schritt 1, indem die Adsorberkolonne 21 mit Sole gefüllt wird. In der Adsorberkolonne 21 befindet sich ein Adsorptionsmittel 23, das die in der Sole enthaltenen Lithiumionen adsorbiert. Wenn in der Sole weitere Ionen vorhanden sind, werden zumindest manche dieser Ionen auch von dem Adsorbtionsmittel adsorbiert.

Anschließend wird in einem weiteren Schritt (Block 3) die Sole aus der Adsorberkolonne 21 abgelassen.

In weiteren optionalen Schritten 5 bzw. 7 wird die Adsorptionskolonne 21 mit Wasser gefüllt und anschließend wird das Wasser aus der Adsorptionskolonne 21 abgelassen. Das Wasser hat die Aufgabe, Ionen, die nicht Lithiumionen sind, aber von dem Adsorptionsmittel 23 adsorbiert wurden, von diesem zu lösen und zu desorbieren. Diese anderen Ionen sind andernfalls Verunreinigungen der mit Lithium-Ionen angereicherten sauren Lösung. Daher ist es vorteilhaft, diese anderen Ionen vor der Desorption der Lithium-Ionen zu desorbieren. Wenn die der Adsorberkolonne 21 zugeführte Sole nur sehr wenige oder keine dieser Verunreinigungen enthält, können die Schritte 5 und 7 entfallen.

Anschließend werden die an dem Adsorptionsmittel 23 adsorbierten Lithiumionen (Verfahrensschritte 9 und 11) desorbiert. Der Block 9 umfasst das Befüllen der Adsorberkolonne 21 mit einer sauren Lösung, gemäß Anspruch 1. Dadurch wird ein Großteil der an dem Adsorptionsmittel adsorbierten Lithiumionen desorbiert. Ein gewisser Anteil der Lithiumionen bleibt jedoch an dem Adsorptionsmittel.

In einem weiteren Schritt 11 wird der mit Lithiumionen angereicherte Eluent abgelassen.

Je nachdem wie effektiv der Desorptionsprozess ist, können die Schritte 9 und 11 ein oder mehrfach wiederholt werden. Dabei wird die Adsorberkolonne 21 mit der sauren Lösung, die aus der vorangegangenen Desorptionsschritt schon mit Lithiumionen angereichert ist, aus dem vorhergehenden Desorptionsschritt befüllt und anschließend wieder abgelassen. Diese Wiederholungen können so oft durchgeführt werden, bis ein optimales Verhältnis zwischen dem Verlust an Adsorptionsmittel und der Maximierung der Desorption von Lithiumionen erreicht ist. Dabei ist zu berücksichtigen, dass bei jedem Desorptionsprozess mit der erfindungsgemäßen sauren Lösung nur etwa 0,4% des Adsorptionsmittels verloren gehen. Insofern ist das Durchführen der Schritte 9 und 11 zwei oder drei Mal möglich. Auch dann ist der Verlust an Adsorptionsmittel erst bei etwa 0,8 bzw. 1,2%. Das ist nur ein Bruchteil des Verlustes, der sich bei der Desorption mit Hilfe einer sauren Lösung auf Basis von Salzsäure einstellt. In dem letztgenannten Fall treten pro Desorptionsschritt Verluste von etwa 5% des Adsorptionsmittels auf.

Nachdem die Desorption (Schritte 9 und 11) abgeschlossen ist, wird die an Lithiumionen reiche saure Lösung ggf. weiter konzentriert. Dies kann beispielsweise mit einer mehrstufigen Elektrolyse, wie sie in der US 6 764 584 B2 beschrieben wird, erfolgen. Die daraus entstandene relativ hoch konzentrierte saure Lösung kann dann weiteren an sich bekannten Schritten zu einem Vorprodukt für die Herstellung von Lithiumionenbatterien weiterverarbeitet werden.

Es hat sich herausgestellt, dass auch mit abnehmender Temperatur der Desorptionsprozess eine ausreichende Effektivität aufweist. Daher ist es vorteilhaft, wenn die saure Lösung auch bei niedrigen Temperaturen von beispielsweise 40°C oder 30°C oder sogar noch geringeren Temperaturen ein zweites Mal in die Adsorptionskolonne 21 gefördert wird.

In der Figur 2 ist der Aufbau einer zur Durchführung des Verfahrens geeignete Adsorptionskolonne 21 dargestellt.

Im Inneren der Adsorptionskolonne 21 befindet sich das Adsorptionsmittel. Es nimmt nicht den ganzen Innenraum der Adsorptionskolonne 21 ein. Die Adsorptionskolonne 21 umfasst einen Einlass 25 und einen Auslass 27. Über den Einlass 25 wird die Sole zugeführt. Über den Auslass 27 wird die Sole abgeführt.

Die saure Lösung kann über den Einlass 25 oder den Auslass 27 zu- und abgeführt werden. Es ist aber auch möglich, für das Zu- und Abführen der sauren Lösung mindestens einen weiteren Anschluss 29 vorzusehen. Dieser Anschluss 29 kann wie in der Figur 2 dargestellt unten an der Adsorptionskolonne 21 angeordnet. Er kann aber auch oben an der Adsorptionskolonne 21 angeordnet sein (nicht dargestellt)

Kurz gesagt: Das erfindungsgemäße Verfahren kann durchgeführt werden, wenn das Desoptionsmittel oben oder unten in die Adsorptionskolonne 21 zugeführt wird.

Die erforderlichen Pumpen und Ventile sind in der Figur 2 nicht dargestellt.

## Patentansprüche

1. Verfahren zur Herstellung eines Lithiumkonzentrats aus Sole (1), welche Lithium-Ionen enthält, umfassend die folgenden Schritte:
a) Einleiten von Sole (1) in eine Adsorberkolonne (21), die mindestens teilweise mit einem Adsorptionsmittel (23) gefüllt ist, so dass Lithium-Ionen an dem Adsorptionsmittel (23) adsorbiert werden;
b) Einleiten eines Eluenten in das Adsorptionsmittel (23), so dass die auf dem Adsorptionsmittel (23) adsorbierten Lithium-Ionen desorbiert werden,
und ist **dadurch gekennzeichnet, dass** der Eluent vor dem Einleiten in das Adsorptionsmittel (23) ein Gemisch aus Wasser und Essigsäure und/oder Wasser und Natrium Peroxodisulfat und/oder Wasser und Ammonium Peroxodisulfat ist.

2. Verfahren nach Anspruch 1, **dadurch gekennzeichnet, dass** der Anteil der Essigsäure im Eluent zwischen 0,1% und 100% beträgt.

3. Verfahren nach Anspruch 1 oder 2, **dadurch gekennzeichnet, dass** der Anteil des Ammonium Peroxodisulfats im Eluent zwischen 0,05% und 65% beträgt.

4. Verfahren nach Anspruch 1, 2 oder 3, **dadurch gekennzeichnet, dass** der Anteil des Natrium Peroxodisulfats im Eluent zwischen 0,05% und 60% beträgt.

5. Verfahren nach einem der vorhergehenden Ansprüche, **dadurch gekennzeichnet, dass** es auch bei einer Temperatur von weniger als 70 °C abläuft.

6. Verfahren nach einem der vorhergehenden Ansprüche, **dadurch gekennzeichnet, dass** der Verfahrensschritt "b) Einleiten des Eluenten" ein oder mehrere Male widerholt werden, und dass bei der oder den Wiederholungen die bereits Lithium-Ionen enthaltende saure Lösung aus dem vorhergehenden Desorptionsschritt verwandt wird.

7. Verfahren nach Anspruch 6, **dadurch gekennzeichnet, dass** bei der Wiederholung des Verfahrensschritts "b) Einleiten des Eluenten" bei einer niedrigeren Temperatur erfolgt als bei der erstmaligen Durchführung des Verfahrensschritts "b).

8. Verfahren nach einem der vorhergehenden Ansprüche, **dadurch gekennzeichnet, dass** zwischen den Verfahrensschritten "a) Einleiten der Sole (1)" und "b) Einleiten des Eluenten ein Zwischenschritt, nämlich das "Einleiten von Wasser von Wasser in das Adsorptionsmittel (23), so dass Ionen von Na, K, Ca und Mg, die an dem Adsorptionsmittel (2) adsorbiert sind, desorbiert und mit dem Ableiten des Wassers aus der Adsorptionskolonne (21) transportiert werden.

9. Verfahren nach einem der vorhergehenden Ansprüche, **dadurch gekennzeichnet, dass** das Adsorptionsmittel (23) lithiumhaltiges Manganoxid und ein Polymer als Bindemittel umfasst.

10. Verfahren nach einem der vorhergehenden Ansprüche, **dadurch gekennzeichnet, dass** das Adsorptionsmittel (23) Lithium-Titan-Oxid (LiTiO) und/oder Lithiumaluminiumschicht-Doppelhydroxidchlorid (LiAn · 2×Al(OH)₃ · mH₂O , mit "An" = Chlor (Cl) , Brom (Br) oder Jod (I), "m" ist ein Zähler) und ein Polymer als Bindemittel umfasst.

11. Verfahren nach Anspruch 9 oder 10, **dadurch gekennzeichnet, dass** das Bindemittel Polyvinylchlorid ist.

12. Verfahren nach einem der vorhergehenden Ansprüche, **dadurch gekennzeichnet, dass** die Sole aus einem pyrometallurgischen Recycling-Verfahren von Lithium-Ionen-Akkumulatoren stammt.

13. Verfahren nach einem der vorhergehenden Ansprüche, **dadurch gekennzeichnet, dass** die Sole aus einem hydrometallurgischen Recyclingverfahren von Lithium-Ionen-Akkumulatoren stammt.
